# EUROPÄISCHE PATENTANMELDUNG

(11) **EP 0 830 020 A1**
(43) Veröffentlichungstag der Anmeldung: **18.03.1998**
(21) Anmeldenummer: 97114421.7
(22) Anmeldetag: 21.08.1997
(51) Int. Cl.: H04N 5/64, G06F 1/16

(54) **Mediengerät**

(30) Priorität: 31.08.1996 DE 29615224 U
(71) Anmelder: Metec MultiMedia Technik GmbH & Co. KG, 76307 Karlsbad (DE)
(72) Erfinder: Klink, Roland F., 75334 Straubenhardt (DE)
(74) Vertreter: Dreiss, Fuhlendorf, Steimle & Becker

(57) **Zusammenfassung**

Beschrieben wird ein Mediengerät, bestehend aus einer Kombination eines Fernsehgerätes (12) mit einem dazugehörigen Bildschirm (14) und einem Computer (16). Dabei ist der Computer (16) seitlich am Fernsehgerät (12) hinter dem Bildschirm (14) und zumindest mit seiner zugänglichen seitlichen Flachseite (17) in senkrechter Ausrichtung zur Geräteaufstandsfläche angeordnet. Externe Anschlüsse (Anschlußfeld 28) für den Computer (16) sind an seiner Oberseite (26) angeordnet.

## Beschreibung

Die Erfindung betrifft ein Mediengerät gemäß dem Oberbegriff des Anspruchs 1.

Aus der DE-OS 44 15 833 ist ein Mediengerät bekannt, das aus einem Fernsehgerät mit dazu gehörigem Bildschirm besteht, in das ein Computer integriert ist. Bei der Integration eines Computers in ein Fernsehgerät besteht eine wesentliche Schwierigkeit in der mechanischen Anordnung des Computers innerhalb des Fernsehgehäuses. Um eine besonders kompakte Bauweise innerhalb des Mediengerätes zu erreichen, werden üblicherweise die sogenannten Steckkarten des Computers so umentwickelt, daß sie in einer sogenannten "Sandwich-Bauweise" unter- oder oberhalb des Fernsehchassis angeordnet werden können. Da bei der Herstellung keine standardisierten Module eingesetzt werden können, ist das Mediengerät entsprechend kostenaufwendig.

Die "Sandwich"-Anordnung hat den Nachteil, daß aufgrund der kompakten Bauweise starke Abschirmmaßnahmen ergriffen werden müssen, um Computer und Fernsehgerät voneinander abzuschirmen. Anschlußmöglichkeiten für externe Peripheriegeräte sind nur an der Rückseite des Mediengeräts möglich. Dieses ist von großem Nachteil, wenn das Mediengerät als PC benutzt wird, da die Anschlüsse relativ häufig benutzt werden, im Gegensatz zum Fernsehbetrieb, bei dem in der Regel alle Anschlüsse nur einmal vorgenommen werden müssen. Weiter nachteilig ist, daß für das bekannte Mediengerät zur Integration des Computers das Gehäuse in Form und Aufbau neugestaltet werden muß. Weiter bereitet es Schwierigkeiten, das Diskettenlaufwerk des Computers, das ebenfalls abgeschirmt werden muß, günstig anzuordnen.

Ausgehend von diesem Stand der Technik ist es Aufgabe der Erfindung, ein verbessertes Mediengerät bereitzustellen, das derart ausgebildet ist, daß die genannten Nachteile vermeidbar sind.

Diese Aufgabe wird gelöst durch ein gattungsgemäßes Mediengerät mit den kennzeichnenden Merkmalen des Anspruchs 1.

Wenn der Computer erfindungsgemäß seitlich am Fernsehgerät und zumindest mit seiner zugänglichen seitlichen Flachseite in senkrechter Ausrichtung zur Geräteaufstandsfläche angeordnet ist, kann er als Standard-PC ausgeführt werden. Dabei ist das Motherboard frei zugänglich. Die für die Verbindung mit dem Fernsehgerät und weiteren peripheren Geräten erforderlichen Interface-Schaltungen sind in Standardkarten ausführbar und in den als Standard-PC ausgebildeten Computer in bekannter Weise einsteckbar. Aufgrund der Standardausführungen des Computers ist das erfindungsgemäße Mediengerät besonders kostengünstig herstellbar.

Zur Verhinderung der Ein- und Ausstrahlung elektromagnetischer Strahlung kann der Computer durch eine einfache Metallumhüllung abgeschirmt werden. Durch die erfindungsgemäße Anordnung ist der Computer leichter zugänglich, beispielsweise zum Austausch von Steckkarten oder ähnlichem.

Aufgrund der erfindungsgemäßen Anordnung des Computers hinter dem Bildschirm des Fernsehgeräts erscheint das Mediengerät in der Ansicht von vorne wie ein bekanntes Fernsehgerät, da der Computer gewissermaßen im Schatten des Bildschirms sich befindet. Trotz der Standardausführung des Computers benötigt das Mediengerät nicht mehr Platzbedarf als ein gewöhnliches Fernsehgerät.

Dabei sind die externen Anschlüsse des seitlich, senkrecht am Fernsehgerät angeordneten Computers an seiner Oberseite angeordnet, denn dadurch sind die Anschlüsse in sehr bequemer Weise von vorne seitlich zugänglich. Um einen Anschluß herzustellen oder abzuziehen, kann lediglich seitlich am Bildschirm vorbei gegriffen werden, ohne daß das erfindungsgemäße Mediengerät verschoben werden muß, wie dies bei bekannten Geräten notwendig ist, um an der Rückseite gelegene Anschlüsse zu erreichen.

Vorteilhafterweise sind das Fernsehgerät und der Computer in einem gemeinsamen Gehäuse untergebracht.

Wenn der Computer gemäß Anspruch 3 schwenkbar mit dem Fernsehgerät verbunden ist, kann dieser zur Wartung, Reparatur oder Erweiterung durch zusätzliche Steckkarten zur Seite hin abgeklappt werden, und ist dann ohne weitere Handgriffe zugänglich.

Im folgenden wird die Erfindung anhand eines Ausführungsbeispiels unter Bezugnahme auf die Zeichnung im einzelnen erläutert. In der Zeichnung zeigen:
- Figur 1: eine perspektivische Ansicht eines erfindungsgemäßen Mediengerätes,
- Figur 2: einen Teilausschnitt aus Figur 1,
- Figur 3: ein Anschlußfeld des Computers gemäß Figur 2 in der Draufsicht,
- Figur 4: eine Rückansicht des Mediengerätes.

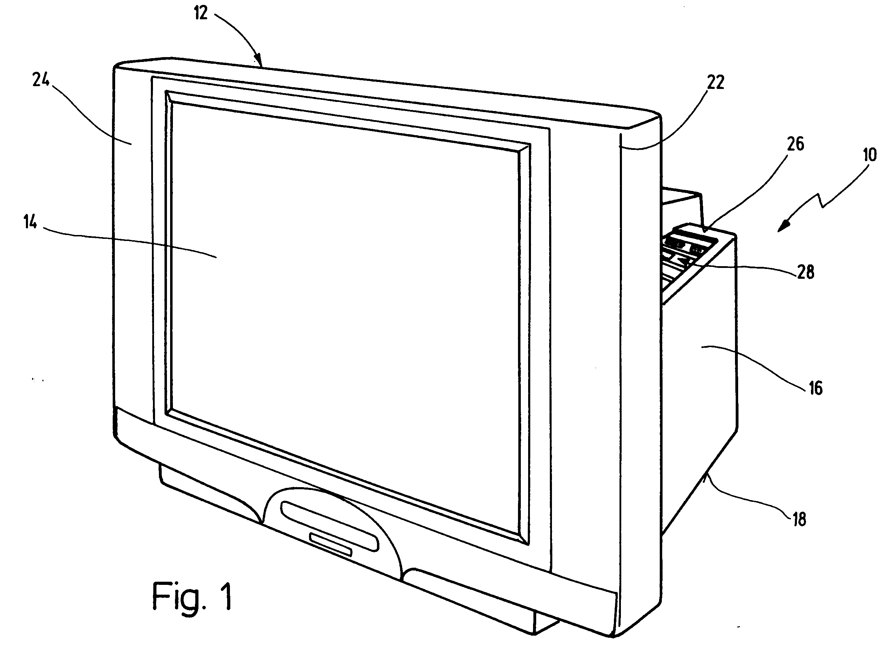

Ein in der Zeichnung dargestelltes erfindungsgemäßes Mediengerät 10 weist ein Fernsehgerät 12 mit einem dazu gehörigen Bildschirm 14 sowie einen Computer 16 auf. Der Computer 16 ist als Standard-PC ausgeführt und seitlich am Fernsehgerät angeordnet, wie dies in Figur 1 dargestellt ist. Der PC 16 ist dabei mit seiner Flachseite 17 senkrecht angeordnet, wobei seine Unterseite 18 einen Teil der Unterseite 20 des Mediengeräts 12 bildet. Wie in Figur 1 verdeutlicht, ist der Computer 16 gewissermaßen im Schatten des Bildschirms 14 angeordnet, so daß bei Betrachtung des Bildschirms 14 des Mediengerätes 12 von vorne, der PC 16 hinter dem Bildschirm 14 gelegen und nicht zu sehen ist. Das Fernsehgerät 12 des Mediengerätes 10 weist Lautsprecher 22 und 24 an den Seiten des Bildschirms 14 auf, so daß der seitlich am Fernsehgerät 12 angeordnete Computer 16 dadurch noch weiter optisch verdeckt ist.

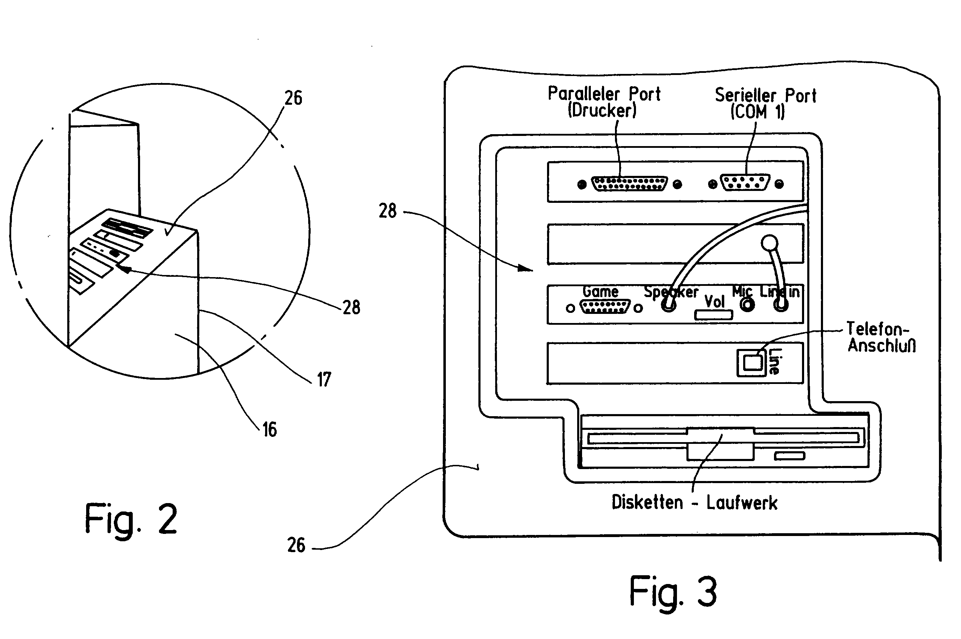

Auf seiner Oberseite 26 weist der Computer ein Anschlußfeld 28 auf, wie in Figur 2 und 3 dargestellt. Das Anschlußfeld 28 umfaßt alle Anschlüsse zum Anschluss externer Geräte und Components, wie beispielsweise parallele (SPP/ECP/EPP) und serielle (16C550) Anschlußports, Gameanschlüsse (Joysticks, Lautsprecheranschlüsse, Telefon und Modemanschlüsse sowie den Zugang zum Diskettenlaufwerk.

Das Fernsehgerät 12 und der Computer 16 sind in einem gemeinsamen Gehäuse untergebracht.

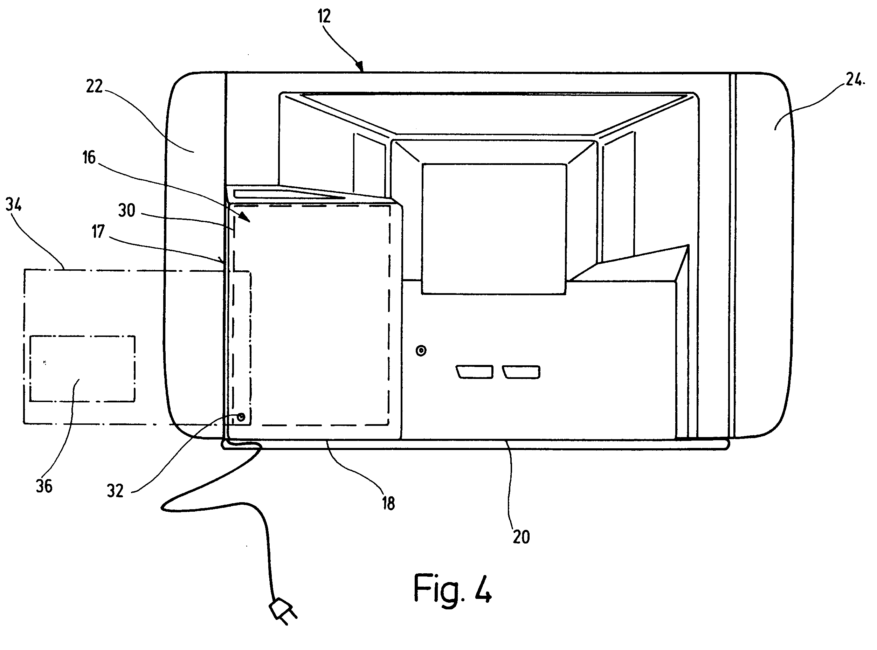

Zur Wartung, Reparatur oder Erweiterung des Computers ist dieser nach Abnahme der Gehäuserückwand aus seiner in Figur 4 gestrichelt dargestellten Position 30 um einen Schwenkpunkt 32 in eine strichpunktierte Position 34, vorzugsweise um 90°, verschwenkbar. Der somit zur Seite abgeklappte Computer 16 ist dann ohne weitere Zugriffe zugänglich, so daß beispielsweise Steckkarten 36 in üblicher Weise austauschbar sind.

## Patentansprüche

1. Mediengerät, bestehend aus einer Kombination eines Fernsehgerätes (12) mit einem dazugehörigen Bildschirm (14) und einem Computer (16),
**dadurch gekennzeichnet, daß**
der Computer (16) seitlich am Fernsehgerät (12) hinter dem Bildschirm (14) und zumindest mit seiner zugänglichen seitlichen Flachseite (17) in senkrechter Ausrichtung zur Geräteaufstandsfläche angeordnet ist und daß externe Anschlüsse (Anschlußfeld 28) für den Computer (16) an seiner Oberseite (26) angeordnet sind.

2. Mediengerät nach Anspruch 1, dadurch gekennzeichnet, daß das Fernsehgerät (12) und der Computer (16) in einem gemeinsamen Gehäuse untergebracht sind.

3. Mediengerät nach einem der vorhergehenden Ansprüche, dadurch gekennzeichnet, daß der Computer (16) schwenkbar mit dem Fernsehgerät (12) verbunden ist und zur Wartung, Reparatur oder Erweiterung zur Seite hin abklappbar ist.
